# EUROPÄISCHE PATENTSCHRIFT

(11) **EP 0 623 873 B1**
(45) Veröffentlichungstag und Bekanntmachung des Hinweises auf die Patenterteilung: **23.09.1998**
(21) Anmeldenummer: 94105925.5
(22) Anmeldetag: 16.04.1994
(51) Int. Cl.: G06F 3/147, G09F 9/00

(54) **Anlage zur elektronischen Preisanzeige an Regalen**
Device for displaying prices-electronically on shelves
Système d'affichage électronique de prix sur rayonnages

(30) Priorität: 05.05.1993 GB 9309246
(43) Veröffentlichungstag der Anmeldung: 09.11.1994
(73) Patentinhaber: Pricer AB, 754 51 Uppsala (SE)
(72) Erfinder: Escritt, Chris G., Olney, Buckinghamshire MK46 5BD (GB); Hellquist, Magnus, S-430 84 Styrsö (SE)
(74) Vertreter: Mrazek, Werner

(56) Entgegenhaltungen:
- EP-A- 0 299 355
- EP-A- 0 485 250
- EP-A- 0 497 533
- WO-A-91/08539
- GB-A- 2 247 760
- GB-A- 2 249 854

## Beschreibung

Die Erfindung bezieht sich auf eine Anlage zur elektronischen Preisanzeige an Regalen, mit einem Computer, einem daran angeschlossenen Steuersender sowie randseitig an den Regalen befestigten, elektronischen Anzeigeeinheiten, wobei zumindest die mit Anzeigeeinheiten bestückten Regale mit elektrisch leitenden Sendeelementen versehen sind, die durch den Steuersender mit einem Wechselstrom gespeist werden und elektromagnetische Energie abstrahlen, der Steuersender durch die Sendeelemente Datenpakete, die die anzuzeigenden Daten enthalten und durch Pausen zeitlich voneinander separiert sind, auf die Anzeigeeinheiten überträgt, und in den Anzeigeeinheiten jeweils ein Bauteil zum Empfang der von den Sendeelementen abgestrahlten Energie angeordnet ist, das eine aufladbare Stromquelle, welche wenigstens einen Teil des Betriebsstromes der Anzeigeeinheit liefert, mit einem Ladestrom speist.

Im modernen Einzelhandel werden in zunehmendem Maße Strichcodes zur Kennzeichnung der Art und des Preises der Ware eingesetzt. Dieses Verfahren hat zum Ergebnis, daß an den eigentlichen Artikeln kaum noch Preisschilder oder -anhänger verwendet werden; die Preiskennzeichnung erfolgt vielmehr durch einen Anhänger oder ein Schild, der oder das an dem Regal, in dem der Artikel zum Verkauf angeboten wird, angebracht wird. Es kann jedoch nicht immer gewährleistet werden, daß der auf dem Schild wiedergegebene Preis mit dem im - zur Abrechnung an der Kasse dienenden - Ladencomputer übereinstimmt, so daß mitunter Kundenbeschwerden oder gar rechtliche Maßnahmen gegen den Geschäftsinhaber die Folge sind. Des weiteren ist nach Preisänderungen das Erneuern der Schilder an der Regalkante relativ arbeitsintensiv, da jedes Schild manuell herzustellen und auszuwechseln ist.

Es wurden daher elektronisch anzeigende Preisschilder entwickelt, die anstelle der konventionellen Schilder an der Regalkante fixiert werden und den Preis der Verkaufsartikel und weitere Informationen optisch anzeigen. Da die elektronischen Anzeigeeinheiten mit dem Ladencomputer in Verbindung stehen, ist gewährleistet, daß der auf dem Schild dargestellte Preis mit dem an der Kasse berechneten übereinstimmt. Zudem kann der zentrale Computer unschwer die Information auf der jeweiligen Anzeigeeinheit aktualisieren. Dies erfolgt durch eine Übertragung, die den spezifischen Adreßcode für die jeweilige Anzeigeeinheit oder die jeweilige Gruppe von Anzeigeeinheiten sowie die Preisangabe für die zugehörige Ware umfaßt. Auf diese Weise lassen sich mit geringem Aufwand die wiedergegebenen Preise - beispielsweise für eine Verkaufsaktion mit reduzierten Preisen - modifizieren.

Die US-A-4,500,880 offenbart derartige elektronische Anzeigesysteme, welche durch Drahtleitungen physikalisch mit einer Stromquelle und dem Ladencomputer verbunden sind. Nachteilig daran ist der hohe Zeitaufwand bei der Herstellung der festen Drahtverbindungen, falls die Anzeigeeinheiten des öfteren versetzt werden. Die Anschlußkontakte zwischen den Anzeigeeinheiten und den Drahtleitungen nutzen sich zudem ab und können brechen, was Fehler in der Daten- und/oder Energieübertragung auf die Schilder zur Folge hat.

Eine Anlage gattungsgemäßer Art ist aus der DE 37 31 852 A1 bekannt geworden: Um auf eine Verdrahtung der Anzeigeeinheiten verzichten zu können, werden sie durch interne Batterien mit elektrischer Energie versorgt. Die wiederzugebenden Informationen werden durch elektromagnetische Wellen übermittelt, die ein mit dem zentralen Computer verbundener Steuersender mittels oberhalb der Regale verlegter Drähte ausstrahlt. Die Daten werden in - den zu aktualisierenden Anzeigeeinheiten zugeordneten - Paketen übertragen, zwischen denen Pausen liegen, in denen keine Wellenabstrahlung erfolgt. Alternativ zu Batterien kann die Energieversorgung der Anzeigeeinheiten durch Akkumulatoren oder Kondensatoren ausreichend hoher Kapazität erfolgen, die während der Übertragung der Datenpakete mittels der empfangenen elektromagnetischen Energie aufgeladen werden. Weiterhin wird vorgeschlagen, die Anzeigeeinheiten außerhalb der Geschäftszeiten durch einen separaten Sender mit elektromagnetischer Energie zu beaufschlagen und aufzuladen.

Als nachteilig ist hier primär die unzureichende Effizienz der Energieübertragung auf die Anzeigeeinheiten anzusehen. Da die als Sendeelemente dienenden Drähte an der Oberseite der Regale verlegt und zudem durch letztere abgeschirmt sind, erweist es sich zur Realisation einer zum Aufladen der Stromquelle und zur fehlerfreien Datenübertragung ausreichend hohen Feldstärke in den - relativ weit entfernten - Anzeigeeinheiten als notwendig, eine entsprechend hohe Sendeleistung zu verwenden, so daß einerseits ein hoher technischer Aufwand und Energiebedarf vonnöten ist, andererseits andere, in der Nähe aufgestellte elektronische Geräte (wie Waagen oder Kassen) durch induzierte Spannungen beeinflußt werden. Hinzu kommt, daß eine Aufladung nur während der Übertragung der Datenpakete möglich ist, weshalb die zu emittierende Feldstärke weiter anwächst. Auch das Personal und die Kunden werden dem Einfluß relativ intensiver elektromagnetischer Felder ausgesetzt. Bei einem außerhalb der Öffnungszeiten durchgeführten Ladevorgang sind hingegen große und teure Akkumulatoren bzw. Kondensatoren hoher Ladekapazität erforderlich, um die Funktionsfähigkeit der Anzeigeeinheiten über die gesamte Geschäftszeit zu gewährleisten.

Ausgehend vom Stande der Technik liegt der Erfindung das Problem zugrunde, eine funktionssichere Anlage zur elektronischen Preisanzeige an Regalen zu schaffen, die sich durch fehlerfreie und effiziente Energie- und Datenübertragung auf die Anzeigeeinheiten auszeichnet. Es ist beabsichtigt, eine Anlage zu realisieren, die sowohl die Flexibilität drahtlos mit dem Computer verbundener Anzeigeeinheiten als auch die Zuverlässigkeit durch Drahtverbindungen gespeister Displays aufweist.

Erfindungsgemäß wird das Problem dadurch gelöst, daß die Sendeelemente in der Nähe der Anzeigeeinheiten an den Rändern der Regale verlegt sind, daß die Bauteile der Anzeigeeinheiten die von den Sendeelementen abgestrahlte Energie induktiv empfangen, und daß der Steuersender die Sendeelemente in den Pausen zwischen den Datenpaketen mit einem Wechselstrom beaufschlagt und die Stromquellen der Anzeigeeinheiten auflädt.

Der Kerngedanke besteht darin, einerseits die vom Steuersender gespeisten Sendeelemente in unmittelbarer Nachbarschaft der Anzeigeeinheiten an den Rändern der Regale zu verlegen, so daß eine effiziente - und aufgrund des Entfallens auf die Sendefrequenz abgestimmter Antennen preiswert realisierbare - induktive Energieübertragung möglich ist, andererseits die Pausen zwischen den Datenpaketen zum Aufladen der Stromquellen der Anzeigeeinheiten auszunutzen. Da der Steuersender die (analog den bekannten Drahtanschlüssen) an den Frontseiten der Regale angebrachten Sendeelemente in den Pausen zwischen den Datenpaketen mit einem Wechselstrom beaufschlagt, wird aufgrund des das Sendeelement umgebenden, als Funktion der Zeit variierenden Magnetfeldes nach dem Faradayschen Gesetz in dem Bauteil zum Empfang der abgestrahlten Energie (in der Regel einer Spule) des Anzeigeelements eine Spannung induziert, die gleichgerichtet wird und zur Ladung der Stromquelle dient. Letztere versorgt die Anzeigeeinheit mit dem für den Betrieb der eigentlichen Displays und der übrigen elektronischen Bauelemente notwendigen Betriebsstrom.

Die Vorteile der Erfindung bestehen darin, daß die Anzeigeeinheiten unabhängig von den anzuzeigenden Daten an beliebigen Positionen anbringbar sind, ohne daß sich die zeitaufwendige Herstellung einer galvanischen Verbindung mit dem Ladencomputer als notwendig erweisen würde; weiterhin entfällt der regelmäßige Austausch der internen Batterie der konventionellen, nicht durch Drahtverbindungen versorgten Anzeigen; die Wartungskosten sind gegenüber derartigen Anlagen reduziert. Entscheidend ist jedoch, daß aufgrund des geringen Abstandes zwischen dem Sendeelement und der Anzeigeeinheit, der induktiven Energieübertragung sowie der Verwendung der Datenpausen zur Ladung der Stromquelle gegenüber der bekannten, mit elektromagnetischen Wellen arbeitenden Anlage nur noch eine wesentlich geringere Sendeleistung erforderlich ist, um den Ladezustand der Stromquelle aufrechtzuerhalten und die Anzeigeeinheit mit elektrischem Strom zu versorgen. Eine nachteilige Beeinflussung der Umgebung des Sendeelementes mit elektromagnetischen Wellen ist somit aufgrund der wesentlich verbesserten Effizienz der Energieübertragung nicht zu befürchten. Auch der Steuersender kann aufgrund der geringeren Sendeleistung wesentlich kleiner und preiswerter gewählt werden. Schließlich besteht die Möglichkeit, eventuell bereits vorhandene, an den Rändern der Regale verlegte Drähte konventioneller Anzeigeeinheiten als Sendeelemente zu verwenden, so daß lediglich ein Austausch der Anzeigeeinheiten erforderlich ist.

In der Regel werden auch die Datenpakete vom zentralen Ladencomputer über den Steuersender und die Sendeelemente aufgrund der optimalen Übertragungssicherheit - Interferenzen oder Abschirmungen sind nicht zu befürchten - induktiv auf eine in den Anzeigeelementen enthaltene Spule odgl. übertragen, obwohl prinzipiell auch eine elektromagnetische oder kapazitive Datenübermittlung denkbar wäre.

Als wiederaufladbare Stromquelle der Anzeigeeinheit bieten sich Akkumulatoren und/oder Kondensatoren entsprechend hoher Kapazität an. Letztere wird zweckmäßigerweise derart gewählt, daß zumindest der Speicherinhalt der Anzeigeeinheiten auch nach dem Abschalten bzw. Ausfall des Steuersenders über einige Tage erhalten bleibt.

Im Rahmen des erfindungsgemäßen Gedankens sind verschiedene Möglichkeiten, die Aufladung der Stromquelle während der Phase der Datenübertragung zu gestalten, denkbar:

Einerseits ist empfohlen, auch die während der Datenübertragung von den Sendeelementen abgestrahlte Energie induktiv zu erfassen und zur Ladung der Stromquelle zu verwenden, um die Effizienz der Energieübertragung weiter zu vergrößern.

Andererseits ist vorgeschlagen, den Steuersender alternierend zwischen einer Phase der Datenübertragung und einer Ladephase umzuschalten, so daß eine Beeinträchtigung der - für die Funktion der Anlage essentiellen - Fehlersicherheit durch die zum Laden dienenden Wechselströme in den Sendeelementen nicht zu befürchten ist. Die Anzeigeeinheiten erkennen die jeweils durchlaufenen Phasen anhand der induzierten Spannungen und schalten intern entsprechend um.

Im konkreten ist dabei der die Sendeelemente durchfließende Wechselstrom in den Pausen zwischen den Datenpaketen, also während der Ladephase von konstanter Frequenz und Amplitude. Die Folge ist, daß den Anzeigeelementen die Erkennung der Ladephase erleichtert ist, und daß aufgrund der konstanten Parameter der induzierten Spannungen eine effiziente, verlustarme Dimensionierung und Regelung des Ladestroms der Stromquellen unschwer möglich ist. Weiterhin wäre auch denkbar, die Amplitude bzw. Frequenz des Wechselstromes (oder die Dauer der Ladephasen) entsprechend des Ladezustandes der Stromquellen zu variieren, falls die Anzeigeeinheiten eine Rückmeldung über ihre Betriebsspannung an den Steuersender ausstrahlen. Auch eine Variation der Dauer der Ladephase entsprechend des Ladezustandes der Anzeigeeinheiten wäre möglich.

Um eine induktive Datenübertragung auf die Anzeigeeinheiten nach dem Faradayschen Gesetz zu ermöglichen, erweist sich als zweckmäßig, durch den Steuersender die Datenpakete auf einen als Träger dienenden Wechselstrom konstanter Frequenz und Amplitude aufzumodulieren. Dabei ist die Frequenzmodulation aufgrund der gegenüber der Amplitudenmodulation wesentlich verringerten Empfindlichkeit gegenüber äußeren Störeinflüssen bevorzugt. Prinzipiell ist weiterhin denkbar, die Daten einem Wechselstrom zu überlagern.

Zur Unterscheidung zwischen der Phase der Datenübertragung und der Aufladung der Stromquellen in den Anzeigeeinheiten ist empfohlen, daß der Steuersender die Sendeelemente alternierend (entsprechend der jeweiligen Phase) mit Wechselströmen unterschiedlicher Amplitude und/oder Frequenz beaufschlagt. In den Anzeigeeinheiten erfolgt die Unterscheidung zwischen den beiden Phasen unproblematisch anhand der Frequenz bzw. Amplitude der induzierten Spannungen. Der Vorzug besteht - insbesondere bei einer Differenzierung anhand der Frequenzen - darin, daß Störungen der Datenübertragung durch die Ladephasen nicht zu befürchten sind.

Weiterhin können die Anzeigeeinheiten nach dem Empfang eines an sie adressierten Datenpaketes ihrerseits eine Bestätigung an den Computer senden. Ein entsprechendes Datenpaket wird mittels einer in der Anzeigeeinheit enthaltenen Induktivität in ein zeitlich variierendes Magnetfeld umgewandelt, das im benachbarten Sendeelement eine Spannung induziert, welche vom Steuersender auf den Computer übertragen wird. Naheliegenderweise kann in der Bestätigungsphase weder eine Ladung der Stromquellen noch eine Datenübertragung vom Steuersender auf die Anzeigeneinheit erfolgen, da ein fehlerfreier Empfang der - relativ schwachen - Bestätigungssignale nicht möglich wäre.

Auch bei der konkreten Gestaltung des zum Empfang dienenden Bauelements der Anzeigeeinheiten bestehen verschiedene Möglichkeiten. Aus Gründen der Reduzierung der Gestehungskosten und des Raumbedarfs ist zum einen vorgeschlagen, die Anzeigeeinheiten mit nur einem einzigen Bauteil (d.h. einer Spule) auszustatten, die sowohl zum Empfang der Daten als auch der Ladeströme dient. Zum anderen besteht auch die Möglichkeit, die Aufgaben auf zwei separate Bauteile zu verteilen, die sich ihrem Verwendungszweck unproblematisch spezifisch anpassen lassen.

Als entsprechendes Bauteil zum Empfang der von den Sendeelementen abgestrahlten Energie kommt vorzugsweise eine flache, in Schichten gewickelte Spule in Frage.

Auch bezüglich der Sendeelemente sind im Rahmen des erfindungsgemäßen Gedankens verschiedene Ausführungsformen denkbar. Sie können beispielsweise ein- oder mehradrige Kabel sein oder die Form eines Flachbandkabels aufweisen.

Um die Sendeelemente vor Beschädigungen zu schützen und ihre Montage zu erleichtern, bietet sich weiterhin an, sie in ein Profil einzuformen, das den Rand des Regals bildet.

Die magnetische Feldstärke in den Anzeigeeinheiten läßt sich entscheidend vergrößern, indem zumindest die den Anzeigen benachbarten Teile der Sendeelemente in Schleifenform verlegt werden. Die vorteilhafte Folge ist eine Erhöhung der induzierten Spannungen und eine Verbesserung insbesondere der Datenübertragungssicherheit.

Die an die Regal-Anzeigeeinheiten zu sendenden und von diesen optisch wiederzugebenden Daten werden in einem zentralen Computer bereitgehalten, der beispielsweise im Hauptbüro einer Händlerkette steht und die Daten über das Telefon oder andere geeignete Einrichtungen an die einzelnen Ladencomputer überträgt. Der Computer im Hauptbüro kann jedoch auch entfallen, wenn die Daten in den einzelnen Ladencomputern bereitgehalten werden. Der Begriff "Comuter" ist im Rahmen der Erfindung so zu verstehen, daß er alle elektronischen Datenspeicher- und Verarbeitungseinrichtungen umfaßt, beispielsweise auch eine elektronische Preisangabesteuerung ("EPOS", Electronic Point-of-Sale) odgl..

Die Daten werden durch eine beliebige Kombination der obengenannten Computeranordnungen über einen oder mehrere Steuersender übertragen. Letztere können im konkreten mit den Sendeelementen fest verdrahtet sein. Alternativ können die Daten auch mittels einer drahtlosen Verbindung, die niederfrequente, hochfrequente oder optische elektromagnetische Wellen umfassen kann, vom Computer auf den Steuersender und/oder vom Steuersender auf - die Sendeelemente speisende - Zwischengeräte übertragen werden.

Um eine Verminderung der Lebensdauer der Stromquellen durch Überladung zu vermeiden, begrenzen die Anzeigeeinheiten den Ladestrom, sobald deren Spannung einen festgelegten Schwellenwert überschreitet.

Werden eine oder mehrere Anzeigeeinheiten für einen längeren Zeitraum vom Regal entnommen, der die Entladezeit der internen Stromquelle überschreitet, können die Anzeigeeinheiten in einer separaten Aufladestation gelagert werden, in der sie mit einem zum Laden ihrer Stromquelle dienenden, alternierenden Magnetfeld beaufschlagt werden.

Im folgenden werden Ausführungsformen der Erfindung anhand der Zeichnungen näher erläutert. Sie zeigen in schematischer Darstellung in
- Figur 1:: die Ansicht einer Anlage zur elektronischen Preisanzeige,
- Figur 2:: einen Schnitt durch ein Regal mit einer Anzeigeeinheit,
- Figur 3:: die Ansicht eines Regals mit einer Anzeigeeinheit,
- Figur 4:: die Innenansicht einer Anzeigeeinheit,
- Figur 5:: eine Schaltung zur Trennung des Ladestromes und der Datenpakete,
- Figur 6:: das zeitliche Verhalten der Frequenz des Wechselstromes.

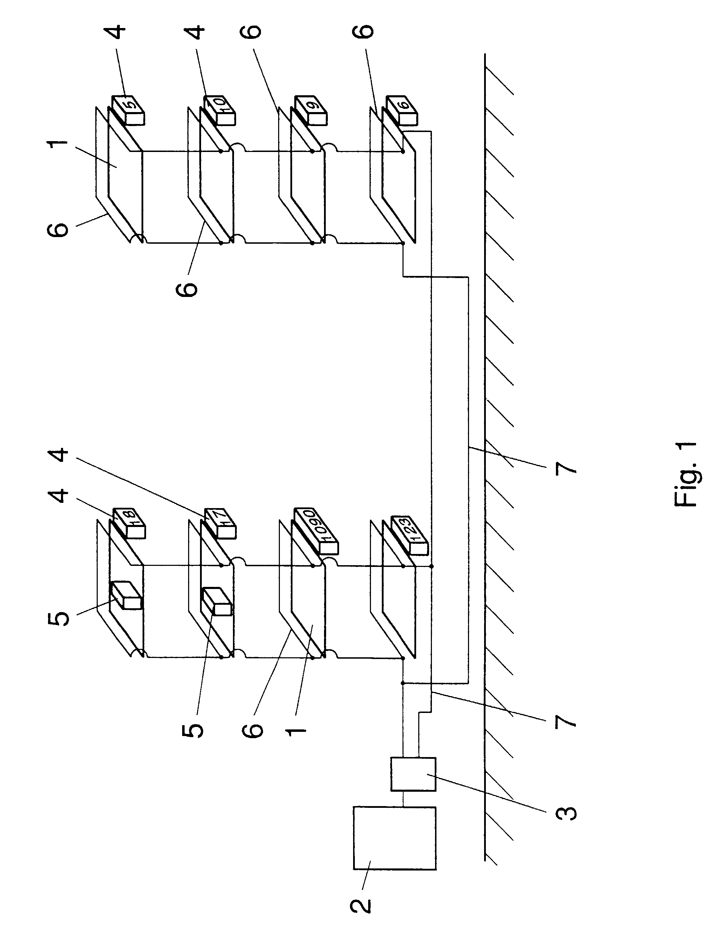

Die in Figur 1 dargestellte Anlage zur elektronischen Preisanzeige kann beispielsweise in einer Verkaufseinrichtung zum Einsatz kommen. Die über- und nebeneinander angeordneten Regale (1) sind mit Waren (5) bestückt, deren Verkaufspreis von elektronischen Anzeigeeinheiten (4) wiedergegeben wird. Die von letzteren wiedergegebenen Daten sind in einem zentralen Computer (2) gespeichert und werden mittels eines Steuersenders (3) und an den Rändern der Regale (1) verlegter Sendeelemente (6) induktiv auf die in unmittelbarer Nähe davon befestigten Anzeigeeinheiten (4) übertragen. Der Steuersender (3) und die Sendeelemente (6) sind durch Zuleitungen (7) miteinander verbunden. Anhand der Zeichnung ist nicht erkennbar, daß der Steuersender (3) in den Pausen zwischen den einzelnen Datenpaketen einen Wechselstrom durch die Sendeelemente (6) schickt, der eine zur Aufladung der Stromquelle der Anzeigeeinheiten (4) dienende Spannung induziert.

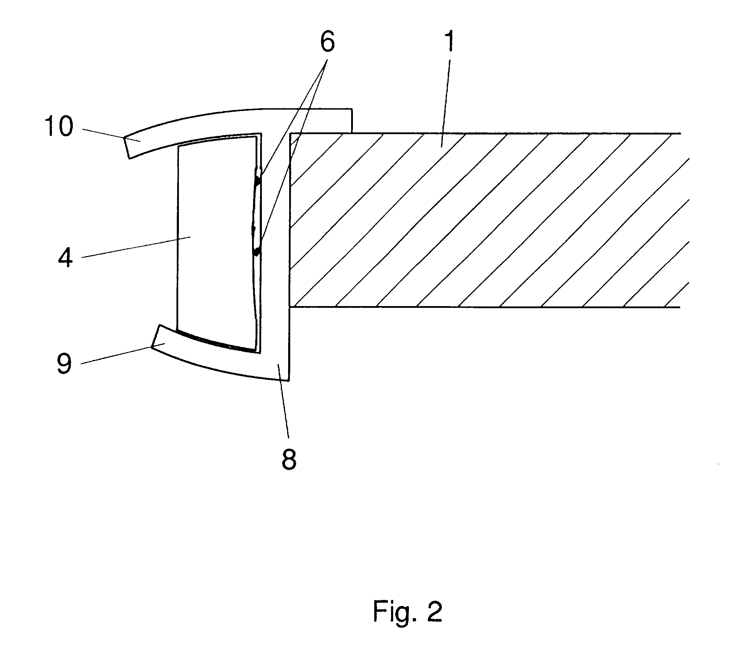

Anhand der Figur 2 ist ersichtlich, daß die Anzeigeeinheit (4) innerhalb eines an der Kante des Regals (1) fixierten Profils (8) geschützt angeordnet ist. Ein schräg nach oben verlaufender Schenkel (9) des Profils (8) liegt an der Unterseite der Anzeigeeinheit (4) an, während ihre Oberseite mit einem zweiten, schräg nach unten verlaufenden Schenkel (10) des Profils (8) in Berührung steht. Der obere Schenkel (10) verbessert die Erkennbarkeit der Anzeigen, da er sie gegenüber dem von oben einfallenden Licht abschirmt. Die Anzeigeeinheit (4) ist (ggf. nach dem Lösen einer Befestigungsvorrichtung) entlang der Achse des Profils (8) verschiebbar und davon entnehmbar. Zwei drahtförmige Sendeelemente (6) verlaufen an der Rückseite der Anzeigeeinheit (4) an der Oberfläche des daran anliegenden, vertikal orientierten Teils des Profils (8). Sie sind parallel zu seiner Achse übereinander angeordnet und am Profil (8) beispielsweise durch eine Schweißverbindung befestigt.

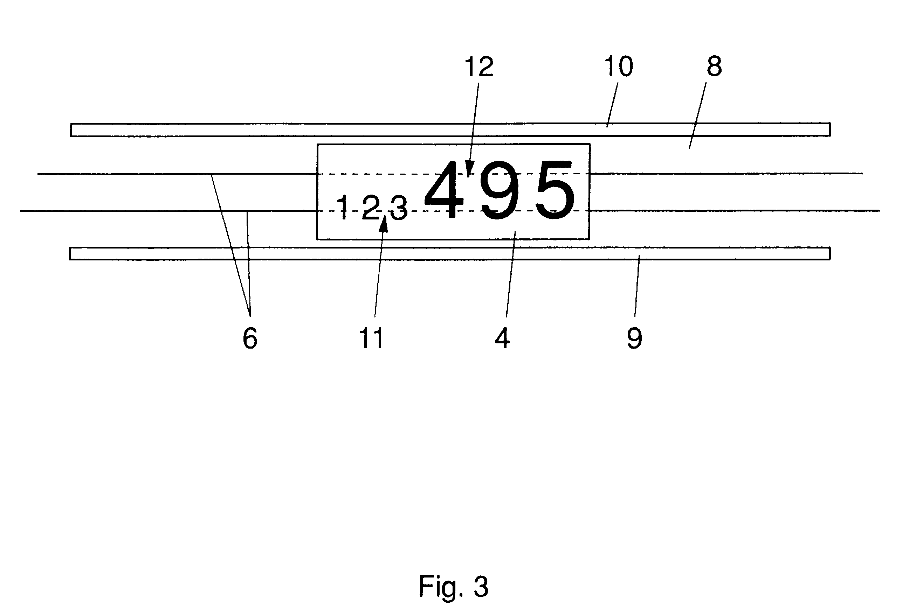

In Figur 3 ist eine Frontansicht des Profils (8) mit einer Anzeigeeinheit (4) dargestellt. Sie zeigt einen Satz kleiner Ziffern (11) an, die z.B. eine Produktinformation, d.h. die Nummer der Ware, enthalten und gibt mit den größeren Ziffern (12) den Preis wieder. Anstelle der Ziffern (11, 12) können auch alphanumerische Displays Verwendung finden. Anzumerken ist, daß die Möglichkeit besteht, nur ein Sendeelement (6) mit Strom zu beaufschlagen und das zweite für den Fehlerfall als Redundanz einzusetzen. Werden hingegen beide Sendeelemente (6) betrieben, können gleich- oder entgegengerichtete Ströme durch sie hindurchfließen.

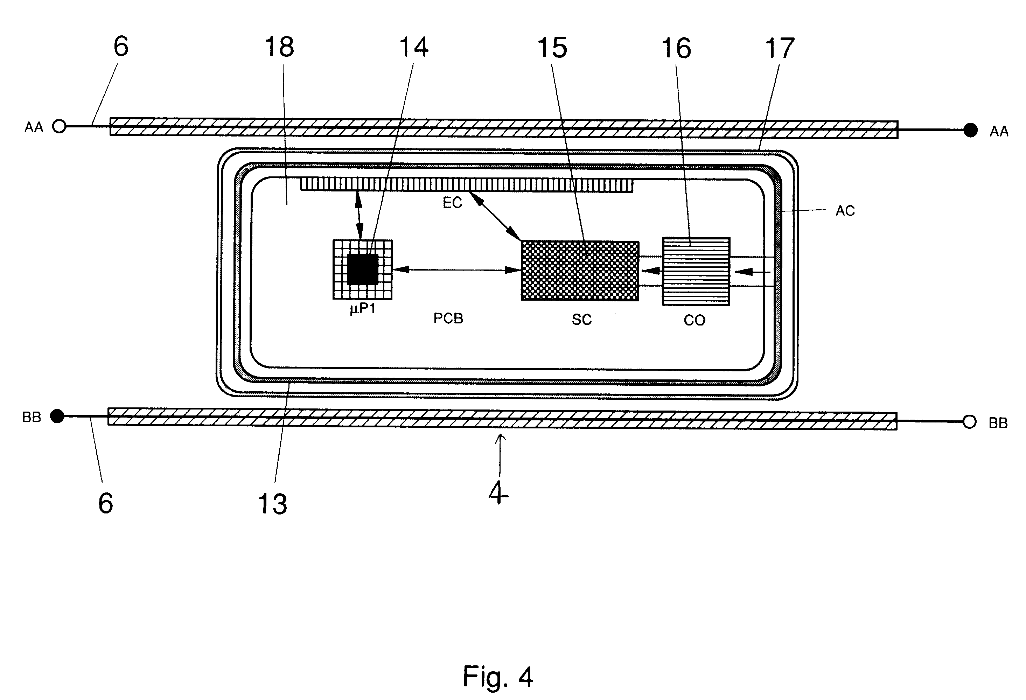

Die Figur 4 zeigt den internen Aufbau einer Anzeigeeinheit (4). Innerhalb des Gehäuses (17) sind die elektronischen Bauelemente auf einer Leiterplatte (18) befestigt. Das Bauteil (13) zum induktiven Empfang der von den Sendeelementen (6) abgestrahlten Leistung ist eine rahmenförmige, an der Innenwandung des Gehäuses (17) azimutal umlaufende Spule, die mit der Gleichrichterschaltung (16) verbunden ist. Der aufgrund der induzierten Spannungen entstehende Strom dient zur Ladung einer Stromquelle (15), im dargestellten Beispiel eines Kondensators, der den Mikroprozessor (14) und die eigentlichen Ziffernanzeigen (11, 12) versorgt. Der Mikroprozessor (14) aktualisiert die wiedergegebenen Ziffern (bzw. Buchstaben), falls er ein für die Anzeigeeinheit (4) spezifisches Datenpaket empfängt. In der dargestellten Ausführungsform verlaufen zwei Sendeelemente (6) im Abstand ober- und unterhalb der Anzeigeeinheit (4).

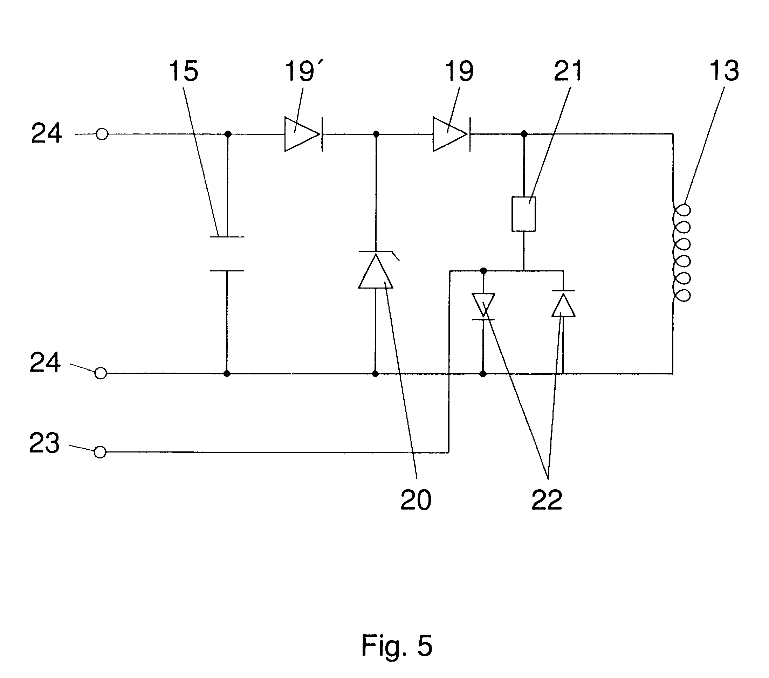

Figur 5 gibt eine Gleichrichter- und Ladeschaltung wieder, wie sie in Fig. 4 eingesetzt werden kann. Die im zum Empfang dienenden Bauteil (13), einer Spule, induzierte Wechselspannung wird mittels einer Diode (19) gleichgerichtet und von einer Zenerdiode (20) auf die gewünschte Betriebsspannung vermindert. Eine die Kathode der Zenerdiode (20) mit der Stromquelle (15) (Kondensator) verbindende Schottky-Diode (19') reduziert den unerwünschten Leckstrom der Zener-Diode (20) und bewirkt eine Aufladung des Kondensators auf die Betriebsspannung (24). Der Widerstand (21) und die antiparallel geschalteten Dioden (22) begrenzen die induzierte Spannung auf ein für die Eingangsstufe des Mikroprozessors (14) geeignete Spannung (23). Diese Schaltung ermöglicht somit, mit nur einem Bauteil (13) sowohl Datenpakete zu empfangen als auch die Stromquelle (15) aufzuladen.

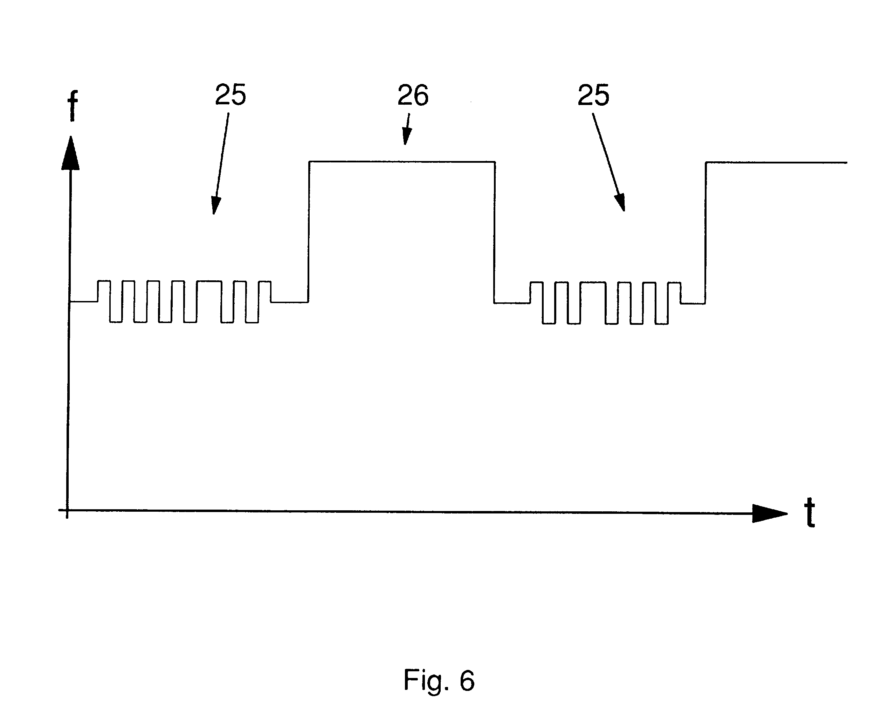

Schließlich zeigt Figur 6 den zeitlichen Verlauf der Frequenz des durch die Sendeelemente (6) fließenden Stromes. In den Phasen der Übertragung der Datenpakete (25) wird eine relativ geringe Frequenz um einen Bruchteil (etwa ein fünftel) ihres Betrages frequenzmoduliert, während die Frequenz in den dazwischen liegenden Pausen (26) etwa verdoppelt wird und konstant bleibt. Die Anzeigeeinheiten (4) können somit die beiden Phasen unschwer anhand der Frequenz der induzierten Spannungen unterscheiden.

Im Ergebnis erhält man eine Anlage zur Preisanzeige an Regalen, die sich durch Betriebssicherheit und geringe Wartungskosten auszeichnet.

## Patentansprüche

1. Anlage zur elektronischen Preisanzeige an Regalen (1), mit einem Computer (2), einem daran angeschlossenen Steuersender (3) sowie randseitig an den Regalen (1) befestigten, elektronischen Anzeigeeinheiten (4), wobei
- zumindest die mit Anzeigeeinheiten (4) bestückten Regale (1) mit elektrisch leitenden Sendeelementen (6) versehen sind, die durch den Steuersender (3) mit einem Wechselstrom gespeist werden und elektromagnetische Energie abstrahlen,
- der Steuersender (3) durch die Sendeelemente (6) Datenpakete (25), die die anzuzeigenden Daten enthalten und durch Pausen (26) zeitlich voneinander separiert sind, auf die Anzeigeeinheiten (4) überträgt, und
- in den Anzeigeeinheiten (4) jeweils ein Bauteil (13) zum Empfang der von den Sendeelementen (6) abgestrahlten Energie angeordnet ist, das eine aufladbare Stromquelle (15), welche wenigstens einen Teil des Betriebsstromes der Anzeigeeinheit (4) liefert, mit einem Ladestrom speist,
**dadurch gekennzeichnet**, daß die Sendeelemente (6) in der Nähe der Anzeigeeinheiten (4) an den Rändern der Regale (1) verlegt sind,
daß die Bauteile (13) der Anzeigeeinheiten (4) die von den Sendeelementen (6) abgestrahlte Energie induktiv empfangen, und
daß der Steuersender (3) die Sendeelemente (6) in den Pausen (26) zwischen den Datenpaketen (25) mit einem Wechselstrom beaufschlagt und die Stromquellen (15) der Anzeigeeinheiten (4) auflädt.

2. Anlage nach Anspruch 1, **dadurch gekennzeichnet**, daß die Anzeigeeinheiten (4) die Datenpakete (25) induktiv empfangen.

3. Anlage nach Anspruch 1 oder 2, **dadurch gekennzeichnet**, daß die Stromquelle (15) ein Kondensator und/oder ein Akkumulator ist.

4. Anlage nach einem der Ansprüche 1 bis 3, **dadurch gekennzeichnet**, daß die Stromquellen (15) der Anzeigeeinheiten (4) auch während der Übertragung der Datenpakete (25) geladen werden.

5. Anlage nach einem der Ansprüche 1 bis 4, **dadurch gekennzeichnet**, daß die Anzeigeeinheiten (4) anhand der induzierten Spannungen zwischen der Ladephase, in der die Aufladung der Stromquelle (15) erfolgt, und der Phase der Übertragung eines Datenpaketes (25) umschalten.

6. Anlage nach einem der Ansprüche 1 bis 5, **dadurch gekennzeichnet**, daß der Wechselstrom in den Pausen (26) zwischen den Datenpaketen (25) von konstanter Frequenz und/oder Amplitude ist.

7. Anlage nach einem der Ansprüche 1 bis 6, **dadurch gekennzeichnet**, daß der Steuersender (3) die Datenpakete (25) auf einen Wechselstrom konstanter Frequenz und Amplitude durch Amplituden- und/oder Frequenzmodulation aufmoduliert und/oder ihm überlagert.

8. Anlage nach Anspruch 7, **dadurch gekennzeichnet,** daß sich die Frequenz und/oder Amplitude des Wechselstroms während der Übertragung der Datenpakete (25) von der Frequenz und/oder Amplitude in den Pausen (26) unterscheidet.

9. Anlage nach einem der Ansprüche 1 bis 8, **dadurch gekennzeichnet,** daß die Anzeigeeinheiten (4) nach dem Empfang eines Datenpaketes (25) ihrerseits ein Datenpaket emittieren, das induktiv auf das benachbarte Sendeelement (6) und von diesem über den Steuersender (3) an den Computer (2) übertragen wird.

10. Anlage nach einem der Ansprüche 1 bis 9, **dadurch gekennzeichnet,** daß die Anzeigeeinheiten (4) ein sowohl zur Energie- als auch zur Datenübertragung dienendes Bauteil (13) aufweisen.

11. Anlage nach einem der Ansprüche 1 bis 9, **dadurch gekennzeichnet**, daß die Anzeigeeinheiten (4) mit zwei separaten Bauteilen (13) ausgestattet sind, von denen jeweils eines zur Energie- und eines zur Datenübertragung dient.

12. Anlage nach einem der Ansprüche 1 bis 11, **dadurch gekennzeichnet,** daß das Bauteil (13) eine flache, in Schichten gewickelte Spule ist.

13. Anlage nach einem der Ansprüche 1 bis 12, **dadurch gekennzeichnet,** daß die Sendeelemente (6) ein- oder mehradrige Kabel sind.

14. Anlage nach einem der Ansprüche 1 bis 13, **dadurch gekennzeichnet,** daß die Sendeelemente (6) Flachbandkabel sind.

15. Anlage nach einem der Ansprüche 1 bis 14, **dadurch gekennzeichnet,** daß die Sendeelemente (6) in ein den Rand des Regals (1) bildendes Profil (8) eingeformt sind.

16. Anlage nach einem der Ansprüche 1 bis 15, **dadurch gekennzeichnet,** daß zumindest die den Anzeigeeinheiten (4) benachbarten Teile der Sendeelemente (6) in Schleifenform verlegt sind.

17. Anlage nach einem der Ansprüche 1 bis 16, **dadurch gekennzeichnet,** daß der Steuersender (3) mit den Sendeelementen (6) verdrahtet ist.

18. Anlage nach einem der Ansprüche 1 bis 16, **gekennzeichnet durch** eine drahtlose Verbindung zwischen dem Computer (1) und dem Steuersender (3) und/oder zwischen dem Steuersender (3) und den Sendeelementen (6).

19. Anlage nach einem der Ansprüche 1 bis 18, **dadurch gekennzeichnet,** daß die Anzeigeeinheiten (4) den Ladestrom ihrer Stromquelle (15) begrenzen, sobald deren Spannung einen festgelegten Schwellenwert überschreitet.

20. Anlage nach einem der Ansprüche 1 bis 19, **gekennzeichnet durch** eine Aufladestation für separate, von den Regalen entnommene Anzeigeeinheiten (4).

## Claims

1. An installation for electronic price display on shelves (1), comprising a computer (2), a driver (3) connected thereto, and electronic display units (4) fixed to the edges of the shelves (1), wherein
- at least the shelves (1) equipped with display units (4) are provided with electrically conductive transmission elements (6) which are fed with an alternating current by the driver (3) and radiate electromagnetic energy,
- the driver (3) transmits through the transmission elements (6) data packets (25) which contain the data for display and which are separated chronologically by intervals (26), and
- each display unit (4) contains a component (13) to receive the energy radiated by the transmission elements (6), said component (13) feeding a charging current to a chargeable current source (15), which supplies at least part of the operating current for the display unit (4),
**characterised in that** the transmission elements (6) are disposed at the edges of the shelves (1) near the display units (4),
in that the components (13) of the display units (4) inductively receive the energy radiated by the transmission elements (6) and
in that the driver (3) feeds an alternating current to the transmission elements (6) in the intervals (26) between the data packets (25) and charges up the current sources (15) of the display units (4).

2. An installation according to claim 1, **characterised in that** the display units (4) receive the data packets (25) inductively.

3. An installation according to claim 1 or 2, **characterised in that** the current source (15) is a capacitor and/or a rechargeable battery.

4. An installation according to any one of claims 1 to 3, **characterised in that** the current sources (15) for the display units (4) are also charged during the transmission of the data packets (25).

5. An installation according to any one of claims 1 to 4, **characterised in that** the display units (4) switch over by means of the induced voltages between the charging phase in which charging of the current source (15) takes place and the transmission phase of a data packet (25).

6. An installation according to any one of claims 1 to 5, **characterised in that** the alternating current in the intervals (26) between the data packets (25) is of constant frequency and/or amplitude.

7. An installation according to any one of claims 1 to 6, **characterised in that** the driver (3) modulates the data packets (25) on to an alternating current of constant frequency and amplitude by amplitude and/or frequency modulation and/or superimposes them thereon.

8. An installation according to claim 7, **characterised in that** the frequency and/or amplitude of the alternating current during the transmission of the data packets (25) differs from the frequency and/or amplitude in the intervals (26).

9. An installation according to any one of claims 1 to 8, **characterised in that** after receiving a data packet (25) the display units (4) in turn emit a data packet which is transmitted inductively to the neighbouring transmission element (6) and from the latter via the driver (3) to the computer (2).

10. An installation according to any one of claims 1 to 9, **characterised in that** the display units (4) have a component (13) serving both for energy transmission and for data transmission.

11. An installation according to any one of claims 1 to 9, **characterised in that** the display units (4) are equipped with two separate components (13), one of which serves for energy transmission and one for data transmission.

12. An installation according to any one of claims 1 to 11, **characterised in that** the component (13) is a flat coil wound in layers.

13. An installation according to any one of claims 1 to 12, **characterised in that** the transmission elements (6) are single or multi-core cables.

14. An installation according to any one of claims 1 to 13, **characterised in that** the transmission elements (6) are ribbon cables.

15. An installation according to any one of claims 1 to 14, **characterised in that** the transmission elements (6) are integrally formed in a profile (8) forming the edge of the shelf (1).

16. An installation according to any one of claims 1 to 15, **characterised in that** at least the parts of the transmission elements (6) neighbouring the display units (4) are laid in loop form.

17. An installation according to any one of claims 1 to 16, **characterised in that** the driver (3) is wired to the transmission elements (6).

18. An installation according to any one of claims 1 to 16, **characterised by** a wire-less connection between the computer (1) and the driver (3) and/or between the driver (3) and the transmission elements (6).

19. An installation according to any one of claims 1 to 18, **characterised in that** the display units (4) limit the charging current of their current source (15) as soon as the voltage thereof exceeds a fixed threshold value.

20. An installation according to any one of claims 1 to 19, **characterised by** a charging station for separate display units (4) removed from the shelves.

## Revendications

1. Installation d'affichage électronique de prix dans des rayonnages (1), comportant un ordinateur (2), un émetteur de commande (3) raccordé à cet ordinateur ainsi que des unités d'affichage électronique (4), fixées au niveau des bords sur les rayonnages (1), et dans laquelle
- au moins les rayonnages (1) équipés d'unités d'affichage (4) sont pourvus d'éléments d'émission électriquement conducteurs (6), qui sont alimentés avec un courant alternatif par l'émetteur de commande (3) et rayonnent une énergie électromagnétique,
- l'émetteur de commande (3) transmet aux unités d'affichage (4), au moyen des éléments d'émission (6), des paquets de données (25), qui contiennent les données devant être affichées et sont séparées les unes des autres dans le temps par des pauses (26), et
- dans les unités d'affichage (4) il est prévu respectivement un composant (13) servant à recevoir l'énergie rayonnée par les éléments d'émission (6) et qui alimente avec un courant de charge une source de courant rechargeable (15), qui délivre au moins une partie du courant de fonctionnement de l'unité d'affichage (4),
caractérisée en ce que les éléments d'émission (6) sont disposés à proximité des unités d'affichage (4) sur les bords des rayonnages (1),
que les composants (13) des unités d'affichage (4) reçoivent inductivement l'énergie rayonnée par les éléments d'émission (6),
que l'émetteur de commande (3) charge les éléments d'émission (6) avec un courant alternatif pendant les pauses (26) entre les paquets de données (25) et charge des sources de courant (15) des unités d'affichage (4).

2. Installation selon la revendication 1, caractérisée en ce que les unités d'affichage (4) reçoivent inductivement les paquets de données (25).

3. Installation selon la revendication 1 ou 2, caractérisée en ce que la source de courant (15) est un condensateur et/ou un accumulateur.

4. Installation selon l'une des revendications 1 à 3, caractérisée en ce que les sources de courant (15) des unités d'affichage (4) sont également chargées pendant la transmission des paquets de données (25).

5. Installation selon l'une des revendications 1 à 4, caractérisée en ce que sur la base des tensions induites, les unités d'affichage (4) commutent entre la phase de charge, dans laquelle s'effectue la charge de la source de courant (15), et la phase de transmission d'un paquet de données (25).

6. Installation selon l'une des revendications 1 à 5, caractérisée en ce que le courant alternatif possède une fréquence et/ou une amplitude constante pendant les pauses (26) entre les paquets de données (25).

7. Installation selon l'une des revendications 1 à 6, caractérisée en ce que l'émetteur de commande (3) module à l'aide des paquets de données (25), au moyen d'une modulation d'amplitude et/ou de fréquence, un courant alternatif à fréquence et amplitude constantes et/ou superpose ces paquets de données à ce courant.

8. Installation selon la revendication 7, caractérisée en ce que la fréquence et/ou l'amplitude du courant alternatif pendant la transmission des paquets de données (25) diffère de la fréquence et/ou de l'amplitude pendant les pauses (26).

9. Installation selon l'une des revendications 1 à 8, caractérisée en ce qu'après la réception d'un paquet de données (25), les unités d'affichage (4) émettent pour leur part un paquet de données, qui est transmis inductivement à l'élément d'émission voisin (6) et, par ce dernier, à l'ordinateur (2) par l'intermédiaire de l'émetteur de commande (3).

10. Installation selon l'une des revendications 1 à 9, caractérisée en ce que les unités d'affichage (4) possèdent un composant (13) utilisé aussi bien pour la transmission de l'énergie que pour la transmission de données.

11. Installation selon l'une des revendications 1 à 9, caractérisée en ce que les unités d'affichage (4) sont équipées de deux composants séparés (13), dont l'un est utilisé pour la transmission d'énergie et dont l'autre est utilisé pour la transmission de données.

12. Installation selon l'une des revendications 1 à 11, caractérisée en ce que le composant (13) est une bobine plate enroulée suivant des couches.

13. Installation selon l'une des revendications 1 à 12, caractérisée en ce que les éléments d'émission (6) sont des câbles à plusieurs conducteurs.

14. Installation selon l'une des revendications 1 à 13, caractérisée en ce que les éléments d'émission (6) sont des câbles en forme de rubans plats.

15. Installation selon l'une des revendications 1 à 14, caractérisée en ce que les éléments d'émission (6) sont conformés selon un profilé (8) formant le bord du rayonnage (1).

16. Installation selon l'une des revendications 1 à 15, caractérisée en ce qu'au moins les parties des éléments d'émission (6), qui sont voisines des unités d'affichage (4), sont disposées en forme de boucle.

17. Installation selon l'une des revendications 1 à 16, caractérisée en ce que l'émetteur de commande (3) est connecté aux éléments d'émission (6).

18. Installation selon l'une des revendications 1 à 16, caractérisée par une liaison sans fil entre l'ordinateur (1) et l'émetteur de commande (3) et/ou entre l'émetteur de commande (3) et les éléments d'émission (6).

19. Installation selon l'une des revendications 1 à 18, caractérisée en ce que les unités d'affichage (4) limitent le courant de charge de leur source de courant (15) dès que leur tension dépasse une valeur de seuil fixée.

20. Installation selon l'une des revendications 1 à 19, caractérisée par un poste de charge pour des unités d'affichage séparées (4), retirées des rayonnages.
